# EUROPEAN PATENT SPECIFICATION

(11) **EP 3 878 704 B1**
(45) Date of publication and mention of the grant of the patent: **14.09.2022**
(21) Application number: 20161847.7
(22) Date of filing: 09.03.2020
(51) Int. Cl.: B60T 13/26, B60T 15/18, B60T 15/38, B60T 15/42, B60T 17/00, B60T 17/04, B60T 17/22

(54) **MULTI CIRCUIT PROTECTION VALVE ASSEMBLY FOR A PRESSURIZED FLUID SYSTEM**
MEHRKREISSCHUTZVENTILANORDNUNG FÜR EIN DRUCKFLUIDSYSTEM
ENSEMBLE SOUPAPES DE PROTECTION MULTI-CIRCUITS POUR UN SYSTÈME DE FLUIDE SOUS PRESSION

(43) Date of publication of application: 15.09.2021
(73) Proprietor: ZF CV Systems Europe BV, 1170 Brussels (BE)
(72) Inventor: SEMENIUK, Maciej, 50-330 Wroclaw (PL)
(74) Representative: Copi, Joachim

(56) References cited:
- EP-A1- 0 561 171
- EP-A2- 0 642 961
- EP-B1- 0 561 171
- CN-U- 204 956 459
- DE-A1-102017 000 694
- US-A- 4 817 501

## Description

The invention relates to a multi circuit protection valve assembly for a pressurized fluid system, in particular for a pneumatic supply system of an air processing unit of a commercial vehicle.

An example of this kind of valve is disclosed in the EP 0 561 171 A1.

In commercial vehicles an air supply unit in general consisting of a compressor and a regeneration unit supplies compressed air through a multi circuit protection valve assembly to subsequent consumer circuits. The consumer circuits in general comprise a first brake circuit and a second brake circuit (main brake circuits), which shall separately be supplied with compressed air, and additional supply circuits, which in general include an air suspension circuit and further air consumer circuits like a pneumatically actuated gear and an air outlet for tyre inflation. The multi circuit protection valve assembly is provided for separating at least the three consumer circuit outlets with a precedence of the main brake circuit outlets over the additional circuit outlet. Therefore the protection valve assembly usually comprises a first and second overflow valve provided for the main brake circuits, respectively, which are pneumatically controlled and open in dependence of the air pressure at their valve inlets and the air pressure at their valve outlets.

When starting to fill empty consumer circuits, the overflow valves are initially blocking the air supply when the pressure in the supply lines extending from the overflow valves to the main brake circuit outlets of the multi circuit protection valve assembly is below a pressure threshold which is set on the overflow valves.

Further filling the additional consumer circuits can only begin when there is a certain pressure in any of the two main brake circuits in order to establish a filling precedence of the two main brake circuits; this is realised by a double check valve arrangement between the two main brake circuit outlets and the additional consumer circuit outlet.

To speed up a pressure built-up, the overflow valves can be bypassed with a bypass valve arrangement, which in general comprises bypass lines with orifices. To prevent air escaping from the main brake circuits in case of pressure loss on the pressure lines before the overflow valve, check valves and orifices are provided in the bypass lines. In case of a circuit leakage, the air is still supplied to it via the bypass with the orifice, thereby causing air loss. To prevent such an air loss, the bypass can be controlled by the pressure value in the other supply line to the other main brake circuit. When the pressure builds up in only one of the supply lines, the bypass to the other supply line is closed by this pressure. Thus the bypass arrangement can be realised with pneumatically controlled check valves and orifices.

Those multi protection circuit valve arrangements therefore usually comprise a casing or housing with fluid ports and a valve arrangement provided in the casing and connected to the fluid ports by pneumatic lines. Hence such an assembly realising these functions contains many parts with complicated structure. Thus manufacturing these parts and assembling the device is complicated, takes a lot of time and results in high costs. Furthermore, amendments in the structure or a replacement of the valves by valves with other dimensions often lead to a complete new design.

Therefore it is an object of the invention to provide a multi circuit protection valve assembly with a high functionality, low production costs and a high flexibility.

### Summary of the invention

This object is realised by a multi circuit protection valve assembly according to claim 1. The subclaims describe preferred embodiments. Thus an air processing unit with such a multi circuit protection valve assembly and a pneumatic system of a commercial vehicle comprising such an air processing unit are provided.

Thus the multi circuit protection valve assembly comprises a stack arrangement of at least three bodies with gaskets between them. A port body or base body comprises at least one fluid port; in particular, the port body comprises outlet ports to the subsequent first and second brake circuits and to the additional consumer circuit. Further a first valve body and a second valve body are stacked on top of the port body; preferably a cover body is finally mounted on top of the second valve body, thereby defining a stack arrangement of the port body, the two valve bodies and the cover body. The inlet connected to the air supply unit with the regeneration unit is preferably provided in the cover body. This stack arrangement is held together by holding means, in particular by screws being inserted into the stack arrangement and extending through screw holes of said bodies.

The stack direction and the screws define a vertical direction, which extends perpendicular to the horizontal extension of the gaskets and top and bottom faces of said bodies. The definition of the terms "top" and "bottom" is arbitrary and only used to describe the stack arrangement.

The bodies comprise internal fluid channels (air channels), which enable both the vertical and horizontal air flow through the stack arrangement; each valve body comprises a top face and a bottom face connected by its internal fluid channels.

The overflow valve arrangement of at least two overflow valves and the bypass valve arrangement are provided in the stack arrangement; they are preferably inserted between the bodies, thereby forming a sandwich construction in which a body beneath the valve arrangement and another body above said valve arrangement receive the valve arrangement, thereby fixing the valve arrangement in vertical direction.

Thus the complete multi circuit protection valve can be realised in a sandwich construction with bodies and with gaskets and valve arrangements between these bodies. This sandwich construction or layer construction enables a stable and robust construction and a relatively easy manufacturing process, in which the bodies and the intermediate parts are stacked or piled up and fixed by the holding means, in particular vertically extending screws.

Such a stack arrangement or sandwich construction further facilitates a variable construction and amendments in the construction or in the parts. The bodies may preferably be manufactured as die cast parts, e. g. made of resin, a plastic material or metal.

The inventive construction further facilitates a compact design; the bodies can be designed with a standard shape, in particular a rectangular shape.

The overflow valves and the bypass valves arrangement are usually spring-loaded; in order to facilitate the manufacturing process the valves can be aligned in vertical direction, so that their springs can be tensioned or loaded in the stack arrangement by pressing the bodies together. Hence the valves can be realised by e.g. a piston inserted into a helical screw fixed to a valve plate, wherein the piston and the spring extend in the vertical direction. The valve casing and its pneumatic sealing seats, surrounding the piston and the valve spring can be realised by the bodies receiving the valve parts. Hence preferably no further additional assembly of covers, bodies or other means to house the valve arrangement is needed.

Thus the bodies can preferably comprise specific compartments in their bottom face or top face for receiving the valves.

The gaskets preferably comprise compartments extending in horizontal direction; these compartments enable the reception of the valves and the construction of fluid channels connecting the internal channels of the bodies. Thus the fluid stream or air stream flows in vertical direction through the internal channels of the bodies and in horizontal direction in the compartment system in the gasket levels between the bodies.

Such a construction enables a high flexibility for the fluid channel system and the provision of different valve parts.

The provision of a stack of two valve bodies, in particular with the additional hood body, facilitates an easy construction, since the internal channels extending through the respective bodies can be easily designed, and connections between the internal channels can then be realised in the gasket levels, in particular by the gasket compartments for receiving the valve arrangements.

According to preferred embodiments, the first gasket level comprises the first gasket and the bypass valves for the bypass airflow in the first filling phase. Further the double check arrangement connecting the main brake circuit outlets and the additional circuit outlet is preferably realised in this first gasket level, in particular by providing these valves in suitable compartments defined by the first gasket.

According to preferred embodiment the overflow valves can be provided between the second valve arrangement and the hood body, however, in an embodiment with only three bodies these overflow valves can be positioned between a first valve body and a second valve body, which then can comprise the inlet to be connected to the air supply unit..

The valves can be positioned as separate parts in compartments defined by the gaskets and/or integrated into the gaskets. Both possibilities enable a flexible design with high functionality.

The top and bottom faces of the bodies are preferably flat, with compartments or channels formed in these faces. Thus the gaskets can be realised as thin plates to be positioned in suitable receptions of these faces.

The invention is described in detail with reference to the appended drawings, in which:
- Fig. 1: is a pneumatic scheme of a pneumatic system of a commercial vehicle with a multi circuit protection valve assembly according to an embodiment of the invention;
- Fig. 2: is an exploded view of the protection valve assembly according to the first embodiment of the invention;
- Fig. 3: is a pneumatic scheme of the protection valve assembly with indicated layer structure;
- Fig. 4: is a detailed exploded view of an air processing unit with the protection valve assembly according to the first embodiment;
- Fig. 5: is a first gasket layer arrangement of the protection valve assembly, comprising a first gasket layer and bypass valves;
- Fig. 6: depicts a second gasket of the protection valve assembly;
- Fig. 7: is a perspective view of a vertical section through the protection valve assembly;
- Fig. 8: shows a further sectional view of the protection valve assembly, through the overflow valves.

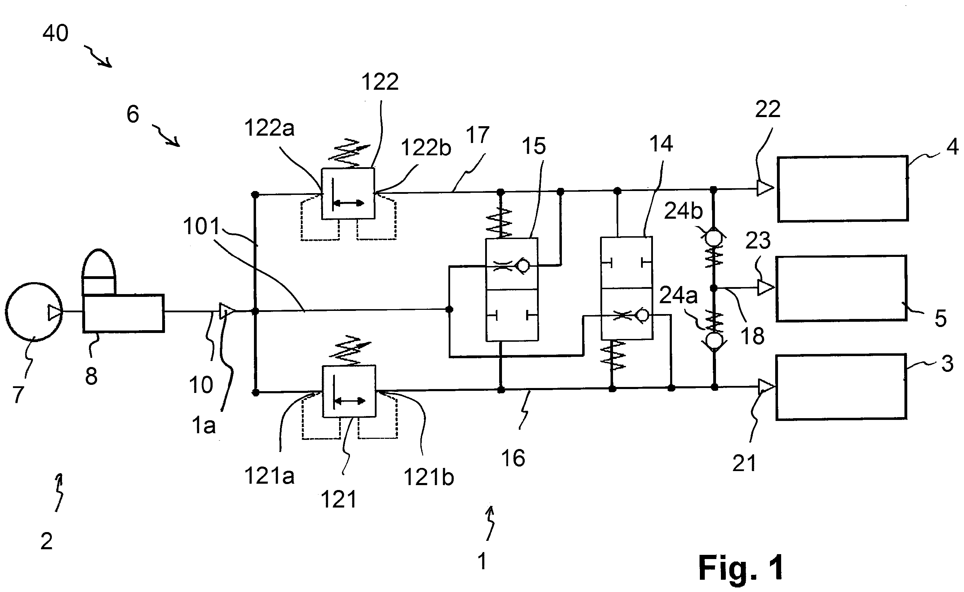

Figure 1 depicts a protection valve assembly 1 which is provided between an air supply unit ASU 2 and several air consumer circuits 3, 4, 5. These elements are part of a pressurized fluid system 40 of a commercial vehicle.

The protection valve assembly 1 and the air supply unit 2 together constitute an air processing unit 6 for supplying the consumer circuits 3, 4, 5 with pressurized air. The air supply unit 2 comprises a compressor 7 and a drier and regeneration assembly 8 for drying the air supplied by the compressor 7; the drier and regeneration assembly 8 can preferably be regenerated in regeneration modes by taking air from the air consumer circuits 3, 4 via the protection valve assembly 1.

The air supply unit 2 delivers compressed air 10 to the protection valve assembly 1, which then distributes the compressed air 10 to the air consumer circuits 3, 4, 5; in general the air consumer circuits 3, 4, 5 are comprised of a first brake circuit 3, a second brake circuit 4 and an additional supply circuit set 5, which in turn can consist of several additional air supply circuits, for example an air suspension system with suspension bellows and lift bellows, a pneumatically actuated gearing mechanism and a tyre inflator.

According to the invention the protection valve assembly 1 is realised in a sandwich arrangement described with respect to the following figures:
The protection valve assembly 1 comprises an inlet 1a connected to the drier and regeneration assembly 8; a first brake circuit outlet 21 and a second brake circuit outlet 22 for the first and second brake circuits 3, 4, respectively. The first brake circuit outlet 21 is connected to the inlet 1a via a first overflow valve 121 and a first supply line 16; correspondingly, the second brake circuit outlet 22 is connected to the inlet 1a via a second overflow valve 122 and a second supply line 17. The overflow valves 121, 122 are pressure controlled by their valve inlets 122a, 121a and their valve outlets 121b, 122b; thus an air supply from the air supply unit 2 through the inlet 1a and the overflow valve 121 to the first brake circuit 3 is only possible after a sufficient pressure is built up at the inlet 1a and in the first supply line 16.

The same applies accordingly for the second overflow valve 122. A bypass valve arrangement 14, 15 with a first 2/2 bypass valve 14 and a second 2/2 bypass valve 15 is provided for enabling a controlled bypass flow in an initial filling phase:
The bypass valves 14, 15 are spring-loaded into their open basic position, in which they allow an air flow from the inlet 1a to their respective brake circuit outlet 21 or 22. This bypass airflow is limited by a throttle, which may be inserted into the bypass valve 14, 15, or outside these bypass valves 14, 15; further a check valve function (non-return valve function) is realised in each bypass path, which check valve function may be realised by check valves in the bypass valves 14, 15, as depicted in figure 1, or outside the bypass valves 14, 15. Further the bypass valves 14, 15 are spring loaded and pressure controlled by both supply lines 16 and 17, thereby enabling a pressure balance between these supply lines 16, 17.

The additional supply circuit set 5 is connected to the first supply line 16 by a first check valve 24a, and to the second supply line 17 via a second check valve 24b. Thus the additional supply circuit outlet 23 can be supplied with compressed air via this double check valve arrangement 24a, 24b from both supply lines 16, 17, thereby separating these supply lines 16, 17 from each other.

The bypass valve arrangement 14, 15 has the following functions:
It allows bypassing of the overflow valves 121, 122 to the main brake circuits 21, 22 in a first filling phase and to speed up filling,
it closes the bypass in case of a circuit failure to prevent air leak,
it provides separation of circuits.

In a first filling phase (system filling via bypasses) PI after starting the compressor 7 compressed air 10 is supplied to the inlet 1a; however, the overflow valves 121, 122 are still in their blocking state, since the air pressure at the inlet 1a and therefore at their valve inlets 121a, 122a is too low to open them, and the pressure in the supply lines 16, 17 is too low to support a valve opening from their outlet side.

The bypass valves 14, 15 are in their open basic positions and therefore compressed air 10 is supplied via the bypass valve arrangement 14, 15 to the first supply line 16 and the second supply line 17, thereby starting to fill the main brake circuits 3, 4 and increasing the pressure in the supply lines 16, 17.

In a second filling phase PII the opening pressure threshold POV is achieved on the inlet 1, thereby opening the overflow valves 121, 122; further, the opening of the overflow valves 121, 122 is supported by the enhanced pressure at their valve outlets 121b, 122b. This constitutes the normal operational state of the protection valve assembly 1; all passages are open, and the system is pressurized by filling the connected consumer circuits 3, 4, as well as the additional supply circuit set 5 after the check valves 24a and 24b are opened. The first supply line pressure p16 and the second supply line pressure p17 in the supply lines 16, 17 are increasing; however, they are increasing nearly simultaneously, and therefore the same pressure values of p16 and p17 are acting on the control inputs of the first bypass valve 14, thereby equalizing each other so that the first bypass valve 14 is still spring loaded into its open basic position. The same applies for the second bypass valve 15. The additional supply circuit outlet 23 is pressurized via both supply lines 16, 17 and the check valves 24a, 24b.

In case of a line break of the first supply line 16 the first supply line pressure p16 drops and therefore, the first overflow valve 121 closes, since the supply pressure p1a at the inlet 1a is not sufficient to open the overflow valve 121 without support from the first supply line pressure p16 acting on the valve outlet 121b. Further the second supply line pressure p17 is high enough to switch the first bypass valve 14 against its spring load into its closed position. Thus any pressure supply to the first supply line 16 has stopped; the pressure supply of compressed air 10 via the second overflow valve 122 and the second supply line 17 to the second brake circuit outlet 22 and via the check valve 24b to the additional supply circuit outlet 23 continues. In the same manner, air supply to the second supply line 17 is stopped in case of a line break in it. These situations describe a safety mode operation. Such an arrangement allows for big orifice diameters of the throttles in the bypass valves 14, 15 or in the bypass lines and very fast pre-filling of the main brake circuits 3, 4.

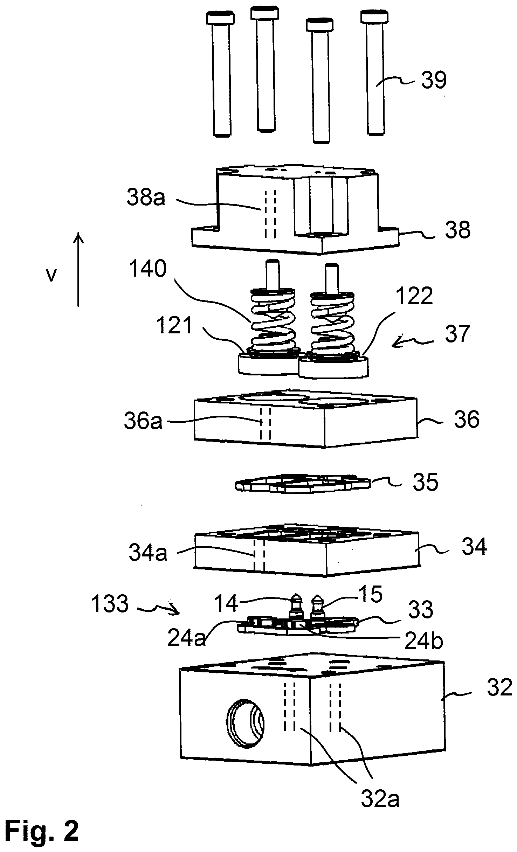

The multi circuit protection valve assembly 1 is realised in a sandwich construction depicted in fig. 2 to 8.

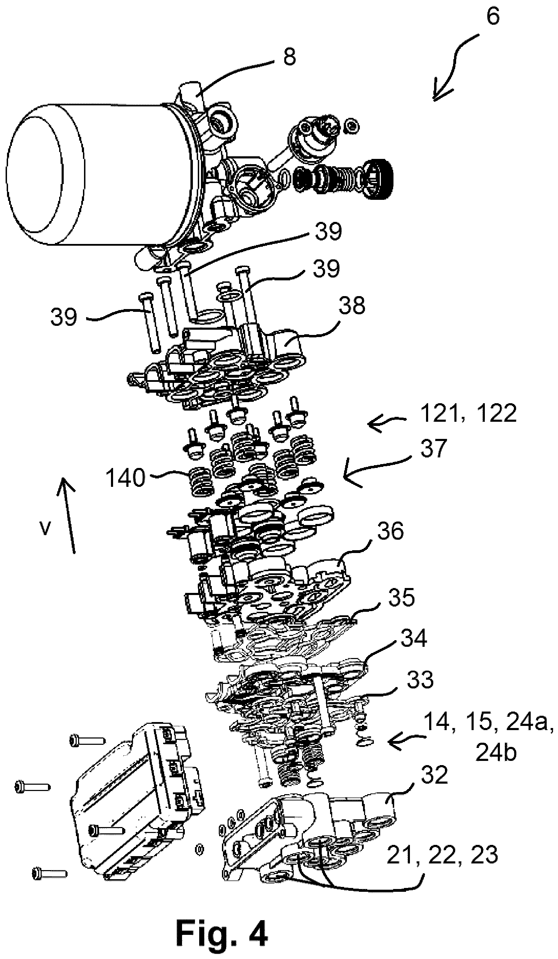

According to the exploded view of fig. 2 the casing of the protection valve assembly 1 is separated into four bodies 32, 34, 36 and 38: a port body 32, a first valve body 34, a second valve body 36 and a cover body 38, which can be made of e. g. resin, another plastic material or metal. The rectangular shape depicted in Fig. 2 is not necessary; Fig. 4 shows a realization without rectangular shape, which is using less body material. The bodies 32, 34, 36 and 38 comprise internal passages 32a, 34a, 36a and 38a and screw holes 26-1, 26-2, 26-3, 26-4. The valve preload is realized by valve springs 140, which are compressed or loaded between the cover body 38 and the second valve body 36.

Between the port body 32 and the first valve body 34 a first gasket 33 is provided; between the first valve body 34 and second valve body 36 a second gasket 35 is provided, and between the second valve body 36 and the cover body 38 an overflow valve subassembly 37 is provided. the first gasket 33 together with further elements integrated or provided in it defines a first gasket unit 133. This stack shown in Fig. 2 defines a sandwich structure, which is stacked together by screws 39 (or bolts) which extend through the screw holes 26-1, 26-2, 26-3, 26-4. In this structure the screws 39 and the stacking direction define a stack direction (vertical direction) v, which extends perpendicular to the horizontal plane defined by the bodies 32, 34, 36, 38 and the first gasket 33 and the second gasket 35. Thus the valve springs 140 are preferably compressed or loaded in the stack direction (vertical direction) v. The internal passages 32a, 34a, 36a and 38a can provide passage in any direction, and continuity of the lines is provided by the gaskets 33 and 35.

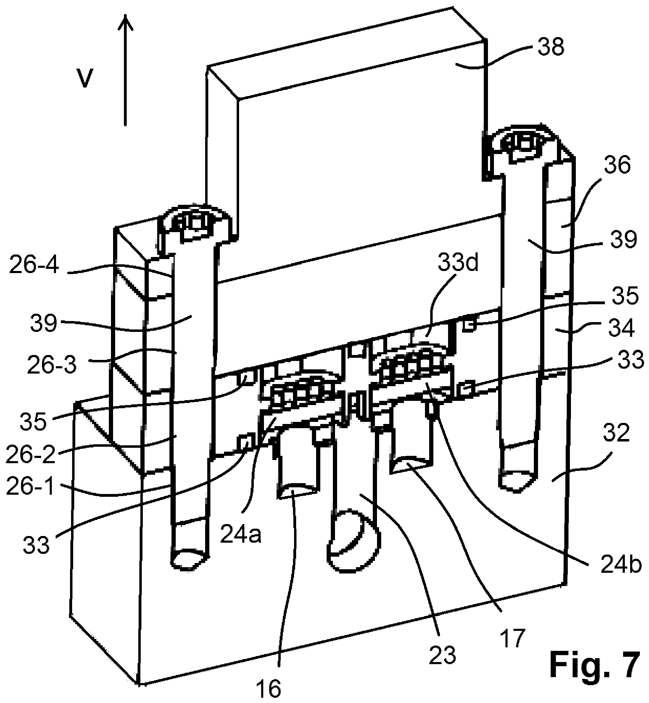

The screws 39 can e.g. be inserted from the top, i.e. the cover body 38, as is shown in Fig. 2, and screwed into threads in the port body 32. Thus in this embodiment of Fig. 7, in which the screws are inserted from the cover-side, the screw holes 26-2, 26-3, 26-4 in the bodies 34, 36 and 38 are through-holes, and the screw hole 26-1 in the base body comprises a thread. The bodies 32, 34, 36 and 38 allow a free design of their passages, channels and screw holes; the first gasket unit 133, the second gasket 35 and the overflow valve subassembly 37 may be designed by several parts, if the protection valve assembly is provided for higher air volume rates.

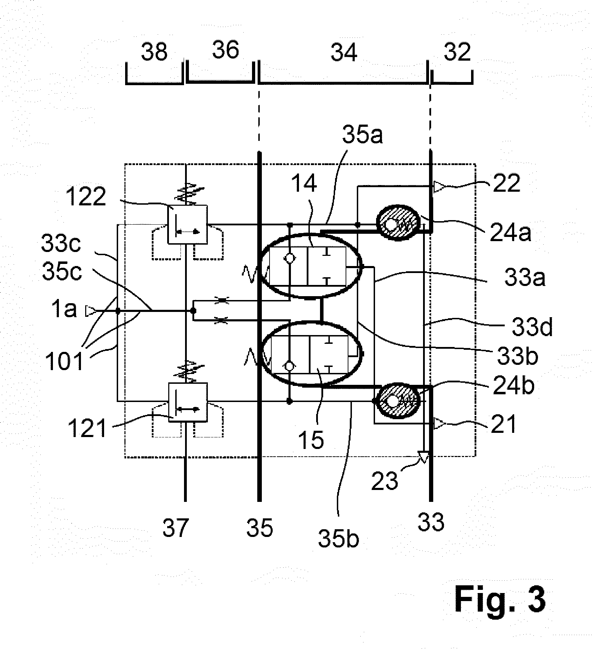

Fig. 3 displays a pneumatic scheme according to Fig. 1, in which the stack structure or level structure is marked by indicating the position of the bodies 32, 34, 36 and gaskets 33, 35 as well as the overflow valve subassembly 37.

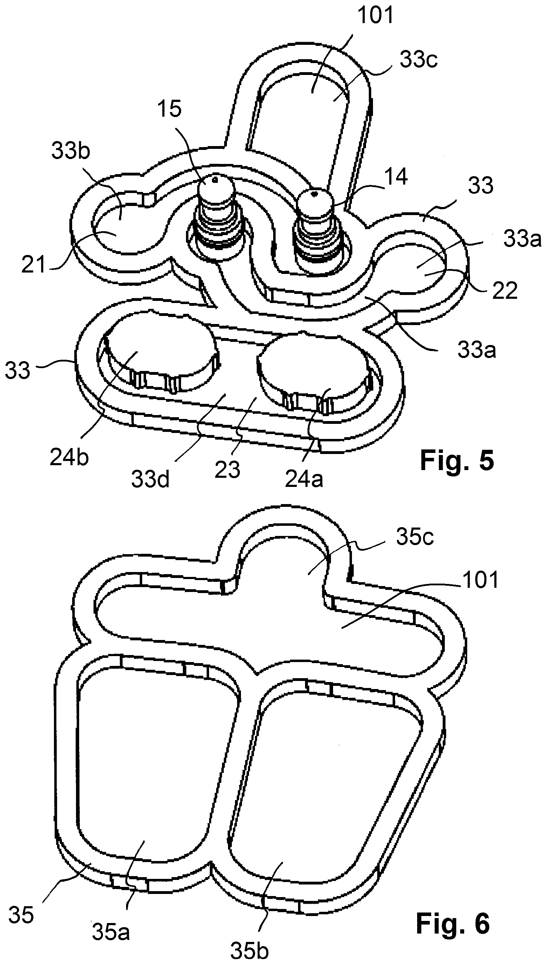

The gaskets 33, 35 comprise compartments 33a-d, 35a-c for defining fluid channels and for receiving further elements, as can be seen in Fig. 5, 6.

The inlet 1a connected to the air supply unit 2 is provided in the cover body 38; the inlet channel 101 of Fig. 1 extending from the inlet 1a to the overflow valves 121, 122 as well as to the bypass valves 14, 15 is realized by internal channels 38a in the cover body 38, the compartment 33c in the first gasket 33, and the compartment 35c in the second gasket 35;
the first supply line 16 of Fig. 1 is realized by the compartment 35b and internal channels; further the control line from the supply line 16 to the second bypass valve 15 is realized by the compartment 33b,
the second supply line 17 of Fig. 1 is realized by internal channels and the compartment 35a; further the control line from the second supply line 17 to the first bypass valve 14 is realized by the compartment 33a,
the check valves 24a, 24b are positioned in a compartment 33d of the first gasket 33, which serves as the third supply line 18 to the additional circuit set 5.

The first gasket 33 and the second gasket 35 are tightening or sealing air channels formed in the port body 32 and the valve bodies 34, 36. Further, several pieces can be integrated in the gaskets 33, 35, or provided as subassemblies surrounded by the gaskets 33, 35. Integrating those pieces into the gaskets facilitates the assembling; however, providing separated individual parts enhances the freedom in design and variability. The port body 32 comprises the outlets 21, 22, 23 and internal air channels. The first gasket unit 133 may preferably be designed according to fig. 6, with the first gasket 33 defining the four compartments 33a, 33b, 33c, 33d. The curved compartments 33a, 33b are provided for receiving the bypass valves 14, 15 and forming the control lines extending from the supply lines 16, 17 to the control inputs of the bypass valves 14, 15.

According to this embodiment the first gasket 33 defines an inlet chamber 33c for sealing an air passage to the inlet 1a and a fourth compartment 33d for receiving the check valves 24a, 24b and preferably defining the additional supply circuit outlet 23. The second gasket 35 thus comprises three compartments 35a, 35b and 35c, wherein according to this embodiment the compartment 35c is connected to the inlet 1a and the large compartments 35a, 35b define the supply lines 16, 17 in fig. 1. The second gasket 35 is used for tightening the passages between the second valve body 36 and the first valve body 34, in particular without additional elements. The second valve body 36 receives - in Fig. 2 and 4 at its top side - an overflow valve subassembly 37 realising the two overflow valves 121, 122. Thus the springs of the overflow valves 121, 122 can be retained by the cover body 38. In the same way the springs of the bypass valves 14, 15 and the check valves 24a, 24b can be retained or hold by the first valve body 34. Thus the stack structure or sandwich structure facilitates the mounting of the spring loaded valves: the bodies 32, 34, 36, 38 and the intermediate gaskets 33 ,35 with further elements are stacked on each other, pressed in stack (vertical) direction v thereby loading the spring forces of the valves, and then fixed by screws 39 thereby tightening this arrangement and the air passages.

Fig. 4 discloses the complete air processing unit APU 6, with includes the drier and regeneration assembly 8 and the multi circuit protection valve arrangement 1. The drier and regeneration assembly 8 in turn is a valve construction with a replaceable drier cartridge.

Fig. 7 helps identifying the relative positions of the gaskets 33, 35, the bodies 32, 34, 36 and 38, and the screws 39.

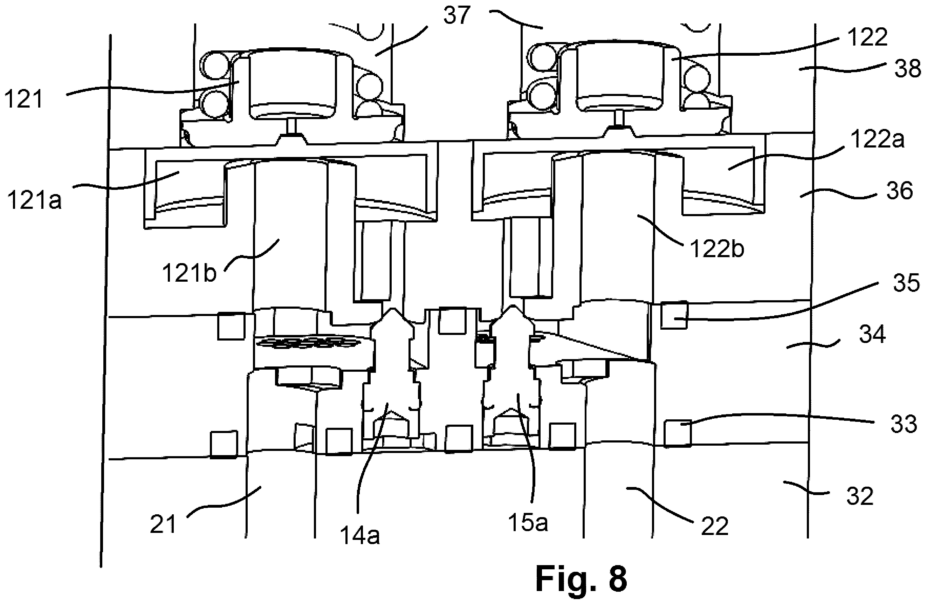

Fig. 8 discloses a section through the overflow valve subassembly 37 with the overflow valves 121, 122 and the bypass valves 14, 15. The bypass valves 14, 15 each comprise a pusher 14a, 15a which is pushed and closed in dependence of the pressure in the supply lines 16, 17, which are connected to the main brake circuit outlets 21 and 22, as can be seen from Fig. 8.

### List of reference numerals (Part of the description):

- 1: protection valve assembly
- 1a: inlet of the protection valve assembly 1
- 2: air supply unit ASU

- 3: first brake circuit
- 4: second brake circuit
- 3, 4, 5: air consumer circuits
- 3, 4: main brake circuits
- 5: pension additional supply circuit set, e.g. comprising an air sussystem and a supply line for a tyre inflator

- 6: air processing unit
- 7: compressor
- 8: drier and regeneration assembly
- 10: compressed air
- 14: first 2/2 bypass valve
- 15: second 2/2 bypass valve
- 14, 15: bypass valve arrangement
- 14a, 15a: pusher

- 16: first supply line
- 17: second supply line
- 18: third supply line to the additional supply circuits 5

- 21: first brake circuit outlet
- 22: second brake circuit outlet
- 21, 22: main circuit outlets
- 23: additional supply circuit outlet

- 24a, b: first, second check valve
- 26-1: screw hole in port body 32
- 26-2: screw hole in first valve body 34
- 26-3: screw hole in second valve body 36
- 26-4: screw hole in cover body 38

- 32: port body, base body
- 33: first gasket
- 33a, 33b: compartments formed in the first gasket 33, for receiving the bypass valves 14, 15 and forming curved channels
- 33c: compartment in the first gasket
- 33d: compartment in the first gasket 33, which serves as the third supply line 18
- 34: first valve body
- 35: second gasket
- 35a, b, c: compartments in the second gasket
- 36: second valve body, connecting body
- 37: overflow valve subassembly
- 38: cover body
- 32a, 34a, 36a, 38a: internal channels in the bodies 32, 34, 36, 38

- 39: screws holding the stack
- 40: pressurized fluid system
- 101: inlet channel, extending from the inlet 1a
- 121: first overflow valve
- 121a,b: inlet, outlet of the first overflow valve
- 122: second overflow valve
- 122a, b: inlet, outlet of the second overflow valve
- 133: first gasket unit
- 140: valve springs
- v: stack direction (vertical direction)

## Claims

1. Multi circuit protection valve assembly (1) for a pressurized fluid system (40) of a commercial vehicle, said multi circuit protection valve assembly (1) comprising a fluid inlet (1a), a first brake circuit outlet (21), a second brake circuit outlet (22), an additional supply circuit outlet (23), an overflow valve subassembly with two overflow valves (121, 122) and a bypass valve arrangement (14, 15) for bypassing said overflow valves (121, 122),
wherein said multi circuit protection valve assembly (1) comprises:
- a port body (32) comprising at least said first and second brake circuit outlets (21, 22) and internal base channels (32a),
- a first valve body (34) being provided on top of said port body (32) in a stack direction (v) and comprising first internal fluid channels (34a),
- a second valve body (36) being provided on top of said first valve body (34) in said stack direction (v) and comprising second internal fluid channels (36a),
- a first gasket (33) provided between said port body (32) and said first valve body (34), for sealing air passages between said internal base channels (32a) and said first internal channels (34a) and defining first gasket compartments (33a, 33b, 33c, 33d)
- a second gasket (35) provided between said first valve body (34) and said second valve body (36), for sealing air passages between said first internal fluid channels (44) and said second internal fluid channels (46) and defining second gasket compartments (35a, 35b, 35c),
wherein said bypass valve arrangement (14, 15) and/or said overflow valve subassembly (121, 122) are at least partially received in said first gasket compartments (33a, 33b, 33c, 33d) or said second gasket compartments(35a, 35b, 35c), wherein said port body (32) and said valve bodies (34, 36) are forming a stack in said stack direction (v), which stack is secured by at least one holding means (39).

2. Multi circuit protection valve assembly (1) according to claim 1,
wherein said bypass valve arrangement (14, 15) and/or said overflow valve subassembly (121, 122) are extending partially into said first valve body (34) and/or said second valve body (36) in said stack direction (v).

3. Multi circuit protection valve assembly (1) according to claim 1 or 2, wherein said additional supply circuit outlet (23) is provided in said port body (32).

4. Multi circuit protection valve assembly (1) according to one of the preceding claims,
wherein said stack further comprises a cover body (38) provided on top of said second valve body (36) in said stack direction (v),
wherein said inlet (1a) is provided in said cover body (38).

5. Multi circuit protection valve assembly (1) according to claim 4,
wherein said overflow valve assembly (37) is being provided between said second valve body (36) and said cover body (38) and extending into said second valve body (36) and/or said cover body (38),
further comprising valve springs (140) being compressed or loaded between said cover body (38) and said second valve body (36) in said stack direction (v).

6. Multi circuit protection valve assembly (1) according to one of the preceding claims,
wherein said holding means (39) are screws (39) or bolts inserted through said stack of bodies (32, 34, 36, 38), preferably being fixed at a first or last body of said stack, in particular by threads.

7. Multi circuit protection valve assembly (1) according to claim 6,
wherein said bodies (32, 34, 36, 38) comprise screw holes (26-1, 26-2, 26-3, 26-4) for receiving said screws (39) in said stack direction (v).

8. Multi circuit protection valve assembly (1) according to one of the preceding claims,
wherein said bypass valve arrangement (14, 15) is integrated into said first gasket (33) and/or provided in said first gasket compartments (33a,b) of said first gasket (33).

9. Multi circuit protection valve assembly (1) according to one of the preceding claims,
wherein said gaskets (33, 35) extend in a plane perpendicular to said stack direction (v).

10. Multi circuit protection valve assembly (1) according to claim 9,
wherein first gasket compartments (22a, b, c, d) of said first gasket (33) are formed in said horizontal plane.

11. Multi circuit protection valve assembly (1) according to claim 9 or 10, wherein said bodies (32, 34, 36, 38) comprise flat top faces and/or flat bottom faces extending in said horizontal plane, in particular with grooves for receiving said first or second gasket (33, 35), respectively.

12. Multi circuit protection valve assembly (1) according to one of the preceding claims,
wherein said bodies (32, 34, 36, 38) are realised as die cast bodies, e. g. made of a metal, a resin or a plastic material.

13. Multi circuit protection valve assembly (1) according to one of the preceding claims, wherein a double check valve arrangement (24a, 24b) is provided between said bypass valve arrangement (14, 15) and said circuit outlets (21, 22, 23),
wherein said double check valve arrangement (24a, 24b) is integrated into said first gasket (33) and/or provided in at least one compartment (33d) of said first gasket (33).

14. Multi circuit protection valve assembly (1) according to one of the preceding claims,
wherein said bypass valve arrangement (14, 15) comprises a first 2/2 bypass valve (14) provided in a first gasket compartment (33a) of said first gasket (33), and a second 2/2 bypass valve (15) provided in another first gasket compartment (33b) of said first gasket (33).

15. Multi circuit protection valve assembly (1) according to claim 14, wherein said two first gasket compartments (33 a, b) are extending in said first gasket (33) thereby forming control lines to control ports of said bypass valves (14, 15).

16. Air processing unit (6) for a pressurized fluid system (40) of a commercial vehicle, said air processing unit (6) comprising a multi circuit protection valve assembly (1) according to one of the preceding claims and an air supply unit (2) with a drier and regeneration assembly (8) to be connected to an compressor (7) and to the inlet (1a) of said multi circuit protection valve assembly (1).

## Patentansprüche

1. Mehrkreisschutzventilanordnung (1) für ein unter Druck stehendes Fluidsystem (40) eines Nutzfahrzeugs, wobei die Mehrkreisschutzventilanordnung (1) einen Fluideinlass (1a), einen ersten Bremskreisauslass (21) einen zweiten Bremskreisauslass (22), einen zusätzlichen Versorgungskreisauslass (23), eine Überlaufventilunteranordnung mit zwei Überlaufventilen (121, 122) und einer Bypassventilbaugruppe (14, 15) zum Umgehen der Überlaufventile (121, 122) umfasst,
wobei die Mehrkreisschutzventilanordnung (1) Folgendes umfasst:
- einen Anschlusskörper (32), der mindestens den ersten und den zweiten Bremskreisauslass (21, 22) und interne Basiskanäle (32a) umfasst,
- einen ersten Ventilkörper (34), der auf dem Anschlusskörper (32) in einer Stapelrichtung (v) bereitgestellt ist und erste interne Fluidkanäle (34a) umfasst,
- einen zweiten Ventilkörper (36), der auf dem ersten Ventilkörper (34) in der Stapelrichtung (v) bereitgestellt ist und zweite interne Fluidkanäle (36a) umfasst,
- eine erste Dichtung (33), die zwischen dem Anschlusskörper (32) und dem ersten Ventilkörper (34) zum Abdichten von Luftdurchführungen zwischen den internen Basiskanälen (32a) und den ersten internen Kanälen (34a) und zum Definieren von ersten Dichtungskammern (33a, 33b, 33c, 33d) bereitgestellt ist
- eine zweite Dichtung (35), die zwischen dem ersten Ventilkörper (34) und dem zweiten Ventilkörper (36) zum Abdichten von Luftdurchführungen zwischen den ersten internen Fluidkanälen (44) und den zweiten internen Fluidkanälen (46) und zum Definieren von zweiten Dichtungskammern (35a, 35b, 35c) bereitgestellt ist,
wobei die Bypassventilbaugruppe (14, 15) und/oder die Überlaufventilunteranordnung (121, 122) mindestens teilweise in die ersten Dichtungskammern (33a, 33b, 33c, 33d) oder die zweiten Dichtungskammern (35a, 35b, 35c) aufgenommen sind,
wobei der Anschlusskörper (32) und die Ventilkörper (34, 36) einen Stapel in die Stapelrichtung (v) bilden, wobei der Stapel von mindestens einem Haltemittel (39) gesichert wird.

2. Mehrkreisschutzventilanordnung (1) nach Anspruch 1,
wobei sich die Bypassventilbaugruppe (14, 15) und/oder die Überlaufventilunteranordnung (121, 122) in der Stapelrichtung (v) teilweise in den ersten Ventilkörper (34) und/oder den zweiten Ventilkörper (36) erstrecken.

3. Mehrkreisschutzventilanordnung (1) nach Anspruch 1 oder 2, wobei der zusätzliche Versorgungskreisauslass (23) im Anschlusskörper (32) bereitgestellt ist.

4. Mehrkreisschutzventilanordnung (1) nach einem der vorhergehenden Ansprüche,
wobei der Stapel ferner einen Abdeckungskörper (38) umfasst, der in der Stapelrichtung (v) auf dem zweiten Ventilkörper (36) bereitgestellt ist,
wobei der Einlass (1a) im Abdeckungskörper (38) bereitgestellt ist.

5. Mehrkreisschutzventilanordnung (1) nach Anspruch 4,
wobei die Überlaufventilanordnung (37) zwischen dem zweiten Ventilkörper (36) und dem Abdeckungskörper (38) bereitgestellt ist und sich in den zweiten Ventilkörper (36) und/oder den Abdeckungskörper (38) erstreckt,
die ferner Ventilfedern (140) umfasst, die in der Stapelrichtung (v) zwischen dem Abdeckungskörper (38) und dem zweiten Ventilkörper (36) zusammengedrückt oder belastet sind.

6. Mehrkreisschutzventilanordnung (1) nach einem der vorhergehenden Ansprüche,
wobei die Haltemittel (39) Schrauben (39) oder Bolzen sind, die durch den Stapel von Körpern (32, 34, 36, 38) eingesteckt sind und vorzugsweise an einem ersten oder letzten Körper des Stapels insbesondere durch Gewinde befestigt sind.

7. Mehrkreisschutzventilanordnung (1) nach Anspruch 6,
wobei die Körper (32, 34, 36, 38) Schraubenlöcher (26-1, 26-2, 26-3, 26-4) zum Aufnehmen der Schrauben (39) in der Stapelrichtung (v) umfassen.

8. Mehrkreisschutzventilanordnung (1) nach einem der vorhergehenden Ansprüche,
wobei die Bypassventilbaugruppe (14, 15) in die erste Dichtung (33) integriert und/oder in der ersten Dichtungskammer (33a,b) der ersten Dichtung (33) bereitgestellt ist.

9. Mehrkreisschutzventilanordnung (1) nach einem der vorhergehenden Ansprüche,
wobei sich die Dichtungen (33, 35) in eine Ebene senkrecht zur Stapelrichtung (v) erstrecken.

10. Mehrkreisschutzventilanordnung (1) nach Anspruch 9,
wobei die ersten Dichtungskammern (22a, b, c, d) der ersten Dichtung (33) in der horizontalen Ebene gebildet sind.

11. Mehrkreisschutzventilanordnung (1) nach Anspruch 9 oder 10, wobei die Körper (32, 34, 36, 38) flache Oberseiten und/oder flache Unterseiten umfassen, die sich in der horizontalen Ebene erstrecken, insbesondere mit Nuten zum Aufnehmen der ersten bzw. der zweiten Dichtung (33, 35).

12. Mehrkreisschutzventilanordnung (1) nach einem der vorhergehenden Ansprüche,
wobei die Körper (32, 34, 36, 38) als Druckgusskörper realisiert sind und beispielsweise aus einem Metall, einem Harz oder einem Kunststoffmaterial bestehen.

13. Mehrkreisschutzventilanordnung (1) nach einem der vorhergehenden Ansprüche, wobei zwischen der Bypassventilbaugruppe (14, 15) und den Kreisauslässen (21, 22, 23) eine doppelte Sperrventilbaugruppe (24a, 24b) bereitgestellt ist,
wobei die doppelte Sperrventilbaugruppe (24a, 24b) in die erste Dichtung (33) integriert und/oder in mindestens einer Kammer (33d) der ersten Dichtung (33) bereitgestellt ist.

14. Mehrkreisschutzventilanordnung (1) nach einem der vorhergehenden Ansprüche,
wobei die Bypassventilbaugruppe (14, 15) ein erstes 2/2-Bypassventil (14), das in einer ersten Dichtungskammer (33a) der ersten Dichtung (33) bereitgestellt ist, und ein zweites 2/2-Bypassventil (15), das in einer anderen ersten Dichtungskammer (33b) der ersten Dichtung (33) bereitgestellt ist, umfasst.

15. Mehrkreisschutzventilanordnung (1) nach Anspruch 14, wobei sich die zwei ersten Dichtungskammern (33 a, b) in der ersten Dichtung (33) erstrecken und dadurch Steuerleitungen zum Steuern von Anschlüssen der Bypassventile (14, 15) bilden.

16. Luftverarbeitungseinheit (6) für ein unter Druck stehendes Fluidsystem (40) eines Nutzfahrzeugs, wobei die Luftverarbeitungseinheit (6) eine Mehrkreisschutzventilanordnung (1) nach einem der vorhergehenden Ansprüche und eine Luftzufuhreinheit (2) mit einer Trockner- und Regenerationsanordnung (8), die mit einem Verdichter (7) und mit dem Einlass (1a) der Mehrkreisschutzventilanordnung (1) zu verbinden sind, umfasst.

## Revendications

1. Ensemble de soupape de protection multi-circuit (1) pour un système de fluide sous pression (40) d'un véhicule utilitaire, ledit ensemble de soupape de protection multi-circuit (1) comprenant une entrée (1a) de fluide, une première sortie (21) de circuit de frein, une deuxième sortie (22) de circuit de frein, une sortie (23) de circuit d'alimentation supplémentaire, un sous-ensemble de soupape de débordement avec deux soupapes de débordement (121, 122) et un agencement de soupape de dérivation (14, 15) pour contourner lesdites soupapes de débordement (121, 122),
dans lequel ledit ensemble de soupape de protection multi-circuit (1) comprend :
- un corps (32) d'orifice comprenant au moins lesdites première et deuxième sorties (21, 22) de circuit de frein et des canaux internes (32a) de base,
- un premier corps de soupape (34) qui est prévu sur le dessus dudit corps (32) d'orifice dans une direction d'empilement (v) et comprenant des premiers canaux internes (34a) de fluide,
- un deuxième corps (36) de soupape qui est prévu sur le dessus dudit premier corps de soupape (34) dans ladite direction d'empilement (v) et comprenant des deuxièmes canaux internes (36a) de fluide,
- un premier joint d'étanchéité (33) prévu entre ledit corps (32) d'orifice et ledit premier corps de soupape (34), pour sceller les passages d'air entre lesdits canaux internes (32a) de base et lesdits premiers canaux internes (34a) et définissant des premiers compartiments de joint d'étanchéité (33a, 33b, 33c, 33d),
- un deuxième joint d'étanchéité (35) prévu entre ledit premier corps de soupape (34) et ledit deuxième corps (36) de soupape, pour sceller les passages d'air entre lesdits premiers canaux internes (44) de fluide et lesdits deuxièmes canaux internes (46) de fluide et définissant des deuxièmes compartiments de joint d'étanchéité (35a, 35b, 35c),
dans lequel ledit agencement de soupape de dérivation (14, 15) et/ou ledit sous-ensemble de soupape de débordement (121,122) sont au moins partiellement reçus dans lesdits premiers compartiments de joint d'étanchéité (33a, 33b, 33c, 33d) ou lesdits deuxièmes compartiments de joint d'étanchéité (35a, 35b, 35c), dans lequel ledit corps (32) d'orifice et lesdits corps de soupape (34, 36) forment un empilement dans ladite direction d'empilement (v), lequel empilement est fixé par au moins un moyen de maintien (39).

2. Ensemble de soupape de protection multi-circuit (1) selon la revendication 1,
dans lequel ledit agencement de soupape de dérivation (14, 15) et/ou ledit sous-ensemble de soupape de débordement (121, 122) s'étendent partiellement dans ledit premier corps de soupape (34) et/ou ledit deuxième corps (36) de soupape dans ladite direction d'empilement (v).

3. Ensemble de soupape de protection multi-circuit (1) selon la revendication 1 ou 2, dans lequel ladite sortie (23) de circuit d'alimentation supplémentaire est prévue dans ledit corps (32) d'orifice.

4. Ensemble de soupape de protection multi-circuit (1) selon l'une des revendications précédentes,
dans lequel ledit empilement comprend en outre un corps (38) de couverture prévu sur le dessus dudit deuxième corps (36) de soupape dans ladite direction d'empilement (v),
dans lequel ladite entrée (1a) est prévue dans ledit corps (38) de couverture.

5. Ensemble de soupape de protection multi-circuit (1) selon la revendication 4,
dans lequel ledit ensemble de soupape de débordement (37) est prévu entre ledit deuxième corps (36) de soupape et ledit corps (38) de couverture et s'étend dans ledit deuxième corps (36) de soupape et/ou ledit corps (38) de couverture,
comprenant en outre des ressorts de soupape (140) qui sont comprimés ou chargés entre ledit corps (38) de couverture et ledit deuxième corps (36) de soupape dans ladite direction d'empilement (v).

6. Ensemble de soupape de protection multi-circuit (1) selon l'une des revendications précédentes,
dans lequel lesdits moyens de maintien (39) sont des vis (39) ou des boulons insérés à travers ledit empilement de corps (32, 34, 36, 38), en étant de préférence fixés au niveau d'un premier ou d'un dernier corps dudit empilement, notamment par des filets.

7. Ensemble de soupape de protection multi-circuit (1) selon la revendication 6,
dans lequel lesdits corps (32, 34, 36, 38) comprennent des trous de vis (26-1, 26-2, 26-3, 26-4) pour recevoir lesdites vis (39) dans ladite direction d'empilement (v).

8. Ensemble de soupape de protection multi-circuit (1) selon l'une des revendications précédentes,
dans lequel ledit agencement de soupape de dérivation (14, 15) est intégré dans ledit premier joint d'étanchéité (33) et/ou prévu dans lesdits premiers compartiments de joint d'étanchéité (33a,b) dudit premier joint d'étanchéité (33).

9. Ensemble de soupape de protection multi-circuit (1) selon l'une des revendications précédentes,
dans lequel lesdits joints d'étanchéité (33, 35) s'étendent dans un plan perpendiculaire à ladite direction d'empilement (v).

10. Ensemble de soupape de protection multi-circuit (1) selon la revendication 9,
dans lequel des premiers compartiments de joint d'étanchéité (22a,b,c,d) dudit premier joint d'étanchéité (33) sont formés dans ledit plan horizontal.

11. Ensemble de soupape de protection multi-circuit (1) selon la revendication 9 ou 10, dans lequel lesdits corps (32, 34, 36, 38) comprennent des faces supérieures planes et/ou des faces inférieures planes s'étendant dans ledit plan horizontal, notamment avec des rainures pour recevoir lesdits premier ou deuxième joints d'étanchéité (33, 35), respectivement.

12. Ensemble de soupape de protection multi-circuit (1) selon l'une des revendications précédentes,
dans lequel lesdits corps (32, 34, 36, 38) sont réalisés sous forme de corps moulés sous pression, par exemple en métal, en résine ou en matière plastique.

13. Ensemble de soupape de protection multi-circuit (1) selon l'une des revendications précédentes, dans lequel un agencement de double clapet antiretour (24a, 24b) est prévu entre ledit agencement de soupape de dérivation (14, 15) et lesdites sorties (21, 22, 23) de circuit,
dans lequel ledit agencement de double clapet antiretour (24a, 24b) est intégré dans ledit premier joint d'étanchéité (33) et/ou prévu dans au moins un compartiment (33d) dudit premier joint d'étanchéité (33).

14. Ensemble de soupape de protection multi-circuit (1) selon l'une des revendications précédentes,
dans lequel ledit agencement de soupape de dérivation (14, 15) comprend une première soupape de dérivation 2/2 (14) prévue dans un premier compartiment de joint d'étanchéité (33a) dudit premier joint d'étanchéité (33), et une deuxième soupape de dérivation 2/2 (15) prévue dans un autre premier compartiment de joint d'étanchéité (33b) dudit premier joint d'étanchéité (33).

15. Ensemble de soupape de protection multi-circuit (1) selon la revendication 14, dans lequel lesdits deux premiers compartiments de joint d'étanchéité (33a,b) s'étendent dans ledit premier joint d'étanchéité (33) formant ainsi des lignes de commande vers les orifices de commande desdites soupapes de dérivation (14, 15).

16. Unité de traitement d'air (6) pour un système de fluide sous pression (40) d'un véhicule utilitaire, ladite unité de traitement d'air (6) comprenant un ensemble de soupape de protection multi-circuit (1) selon l'une des revendications précédentes et une unité d'alimentation en air (2) avec un ensemble de séchage et de régénération (8) à connecter à un compresseur (7) et à l'entrée (la) dudit ensemble de soupape de protection multi-circuit (1).
